# EUROPÄISCHE PATENTSCHRIFT

(11) **EP 4 240 624 B1**
(45) Veröffentlichungstag und Bekanntmachung des Hinweises auf die Patenterteilung: **18.03.2026**
(21) Anmeldenummer: 21782483.8
(22) Anmeldetag: 20.09.2021
(51) Int. Cl.: B60T 8/174, B60T 8/1755, B60W 30/02, B60W 40/12, B60W 50/08

(54) **VERFAHREN ZUR DURCHFÜHRUNG VON REGELVORGÄNGEN IN EINEM FAHRZEUG**
METHOD FOR CARRYING OUT CONTROL PROCEDURES IN A VEHICLE
PROCÉDÉ DE RÉALISATION DE PROCÉDURES DE COMMANDE DANS UN VÉHICULE

(30) Priorität: 04.11.2020 DE 102020213857
(43) Veröffentlichungstag der Anmeldung: 13.09.2023
(73) Patentinhaber: Robert Bosch GmbH, 70442 Stuttgart (DE)
(72) Erfinder: MAGET, Fabiola, 71640 Ludwigsburg (DE); ELTER, Stephan, 74189 Weinsberg (DE); HAEBERLE, Steffen, 74348 Lauffen Am Neckar (DE)
(86) Internationale Anmeldenummer: PCT/EP2021/075803
(87) Internationale Veröffentlichungsnummer: WO 2022/096187

(56) Entgegenhaltungen:
- EP-A1- 0 638 742
- DE-A1- 10 359 216
- DE-A1- 102009 024 036
- US-A1- 2005 222 717

## Beschreibung

Die Erfindung bezieht sich auf ein Verfahren zur Durchführung von Regelvorgängen in einem Fahrzeug.

### Stand der Technik

Bekannt sind vielfältige Regelsysteme in Fahrzeugen mit Reglern im Bremssystem, im Lenksystem, im Antriebssystem und im Fahrwerk. Als Beispiel werden Antriebsschlupf-Regelsysteme (ASR) und elektronische Stabilitätsprogramme (ESP) genannt, über die die Längsdynamik und die Querdynamik des Fahrzeugs beeinflussbar sind. Die verschiedenen Regler im Fahrzeug müssen jeweils fahrzeugabhängig parametriert werden. Die Regelschwellen der Regler können gegebenenfalls dynamisch an die aktuelle Fahrsituation angepasst werden. Ein Beispiel davon ist aus der DE 103 59 216 A1 bekannt.

### Offenbarung der Erfindung

Das erfindungsgemäße Verfahren ermöglicht in effizienter Weise die Durchführung von Regelvorgängen in einem Fahrzeug. Die Regelvorgänge betreffen die Regelungen mithilfe von mindestens zwei verschiedenen Reglern und/oder mindestens zwei verschiedenen Teilreglern eines Reglers (Rᵢ) im Fahrzeug, die auf der Basis von aktuellen Zustands- und/oder Umfeldgrößen des Fahrzeugs durchgeführt werden. Bei den Reglern handelt es sich um Regler, mit denen vorteilhafterweise die Fahrdynamik des Fahrzeugs beeinflussbar ist, insbesondere die Längsdynamik und/oder die Querdynamik des Fahrzeugs. Als Regler kommen beispielsweise ein ESP-Regler, ein Antriebsschlupfregler ASR oder dergleichen in Betracht.

Als Teilregler, die in einem gemeinsamen Regler verwirklicht sind, kommen verschiedene Reglerfunktionen bzw. Regleraufgaben eines Reglers in Betracht. Zum Beispiel kann ein erster Teilregler eine Vorsteuerfunktion mit offenem Regelkreis und ein zweiter und gegebenenfalls weitere Teilregler des gleichen Reglers eine Feedback-Regelung bzw. Reglerrückkopplung mit geschlossenem Regelkreis umfassen. Ein erster Teilregler kann beispielsweise präventiv arbeiten und ohne Reglerrückkopplung das Fahrverhalten des Fahrzeugs ändern, wohingegen ein zweiter und gegebenenfalls weitere Teilregler des gleichen Reglers mit Reglerrückkopplung stabilisierend auf das Fahrverhalten wirkt. Bei modellbasierten Regelungen beinhalten die Teilregler auch Modellbeeinflussungen, welche über die Vorsteuerung gestellt werden.

Mithilfe des erfindungsgemäßen Verfahrens werden mindestens zwei verschiedene Stabilitätsindikatoren aus aktuellen Zustands- und/oder Umfeldgrößen des Fahrzeugs ermittelt. Für jeden Stabilitätsindikator, die jeweils als skalare oder vektorielle Größe ausgeführt sind, werden unterschiedliche Zustands- bzw. Umfeldgrößen des Fahrzeugs herangezogen. Es kann gegebenenfalls zweckmäßig sein, dass teilweise gleiche Zustands- und Umfeldgrößen für die verschiedenen Indikatoren verwendet werden, jedoch muss mindestens eine Umfeld- bzw. Zustandsgröße in den verschiedenen Stabilitätsindikatoren unterschiedlich sein.

Aus den verschiedenen Stabilitätsindikatoren wird gemäß einer vorgegebenen Berechnungsvorschrift ein Kritikalitätsindikator berechnet, der ebenfalls als skalare oder gegebenenfalls als vektorielle Größe ausgeführt ist. Der Kritikalitätsindikator wird in mindestens zwei verschiedenen Reglern oder Teilreglern des Fahrzeugs zur Bestimmung und Festlegung von Reglerparametern verwendet.

Diese Vorgehensweise hat den Vorteil, dass mit nur einem Wert - der Kritikalitätsindikator - verschiedene Regler oder Teilregler im Fahrzeug parametriert werden können, wobei über die Stabilitätsindikatoren die aktuelle Fahrsituation im Hinblick auf die aktuellen Zustandsgrößen und die aktuellen Umfeldgrößen des Fahrzeugs berücksichtigt wird. Jedem Wert des Kritikalitätsindikators ist in den verschiedenen Reglern oder Teilreglern ein definierter Reglerparametersatz zugeordnet. Es ist somit möglich, kontinuierlich auf der Grundlage der aktuellen Umfeld- und Fahrsituation alle beteiligten Regler bzw. Teilregler mit aktuellen Werten zu parametrisieren.

Über den Kritikalitätsindikator kann beispielsweise die zugelassene Eingriffsstärke eines Reglers oder Teilreglers kontinuierlich angepasst werden. Dies erlaubt es beispielsweise, einen Agilisierungseingriff zur Erhöhung eines sportlichen Fahrverhaltens für den Fall zuzulassen, dass dies aufgrund der Höhe des Kritikalitätsindikators erlaubt ist. Dies verbessert auch die Akzeptanz eines Reglereingriffs durch den Fahrer, da die Höhe des Kritikalitätsindikators mit dem subjektiven Gefühl des Fahrers in einer aktuellen Fahrsituation korreliert.

Gemäß einer vorteilhaften Ausführung umfassen die Stabilitätsindikatoren querdynamische Zustandsgrößen und längsdynamische Zustandsgrößen. Hierbei kommen Zustandsgrößen auf Lage-, Geschwindigkeits- und/oder Beschleunigungsebene in Längsrichtung und in Querrichtung des Fahrzeugs in Betracht. Bei den betrachteten Zustandsgrößen handelt es sich beispielsweise um die Längsgeschwindigkeit, um den Radschlupf an einem oder mehreren Fahrzeugrädern, um die Fahrzeugquerbeschleunigung, um den Schräglaufwinkel, um den Lenkwinkel und dergleichen. Des Weiteren kann auch die Gaspedalstellung und/oder die Bremspedalstellung berücksichtigt werden. Als Umfeldgrößen wird insbesondere der Straßenreibwert berücksichtigt. Des Weiteren ist eine Energiebetrachtung möglich, die sich in einem Stabilitätsindikator niederschlägt, wobei bei der Energiebetrachtung der Umsatz der Translationsenergie in die Rotationsenergie ins Verhältnis zu dem maximal möglichen Energiepotenzial gesetzt wird. Auch das Fahrerverhalten kann als Umfeldgröße berücksichtigt werden, beispielsweise zusätzlich zu der oben erwähnten Gaspedal- und der Bremspedalstellung auch die Lenkradstellung oder sonstige fahrerspezifische Größen, zum Beispiel der Aktivitätszustand des Fahrers, was aus den Fahrerbetätigungen abgeleitet oder über eine Beobachtungssensorik im Fahrzeuginnenraum ermittelt werden kann.

Gemäß noch einer weiteren vorteilhaften Ausführung wird in der Berechnungsvorschrift zur Bestimmung des Kritikalitätsindikators eine Gewichtung der verschiedenen Stabilitätsindikatoren durchgeführt. Diese Vorgehensweise ermöglicht es, dass die einzelnen Stabilitätsindikatoren einen unterschiedlich großen Einfluss auf den Kritikalitätsindikator haben.

Die Berechnungsvorschrift, insbesondere zur Gewichtung der verschiedenen Stabilitätsindikatoren, kann eine Fuzzy Logic aufweisen oder auf der Basis einer Künstlichen Intelligenz aufgebaut sein.

Gemäß weiterer vorteilhafter Ausführung kann zumindest ein Stabilitätsindikator zur Begrenzung des Kritikalitätsindikators herangezogen werden. Es ist beispielsweise möglich, einen Gierratenindikator als Stabilitätsindikator zu bestimmen, der vollständig oder maßgeblich von der Gierrate abhängt. Dieser Gierraten-Stabilitätsindikator kann zur Begrenzung eines zuvor aus weiteren Stabilitätsindikatoren ermittelten Kritikalitätsindikators herangezogen werden.

Des Weiteren ist es möglich, einen oder mehrere Stabilitätsindikatoren, welche sich nur auf einen Teilwertbereich des Kritikalitätsindikators beziehen, zu einer entsprechenden Begrenzung des Kritikalitätsindikators heranzuziehen. Dies betrifft beispielsweise einen Stabilitätsindikator, der vom Fahrerverhalten abhängt, einen Radschlupf-Stabilitätsindikator, einen die Gierbeschleunigung betreffenden Stabilitätsindikator und/oder einen die Längsgeschwindigkeit betreffenden Stabilitätsindikator. Diese Stabilitätsindikatoren und gegebenenfalls alternative oder zusätzliche Stabilitätsindikatoren können einerseits einen Teilwertbereich des Kritikalitätsindikators maßgeblich bestimmen und andererseits zu einer Begrenzung nach oben oder nach unten des Kritikalitätsindikators führen.

Die Zuordnung eines Stabilitätsindikators zu einem bestimmten Wertebereich des Kritikalitätsindikators betrifft beispielsweise nur den Teilbereich zwischen 0 % und 50 % oder nur den Teilbereich zwischen 50 % und 100 % des Kritikalitätsindikators. Die Stabilitätsindikatoren werden entsprechend skaliert.

Aus den hieraus resultierenden Indikatoren kann gemäß weiterer Berechnungsvorschrift, beispielsweise über Fuzzy Logic oder Künstliche Intelligenz, der gesuchte Kritikalitätsindikator ermittelt werden.

Gemäß einer weiteren vorteilhaften Ausführung ist vorgesehen, dass ein oder mehrere Regler oder Teilregler, gegebenenfalls sämtliche Regler oder Teilregler nur für den Fall aktiviert werden, dass der Kritikalitätsindikator eine Aktivierungsschwelle überschreitet. Bei einem verhältnismäßig niedrigen Wert des Kritikalitätsindikators befindet sich das Fahrzeug aktuell in einer unkritischen Situation, die einen Eingriff eines, mehrerer oder sämtlicher Regler oder Teilregler nicht erforderlich macht. Es kann gegebenenfalls zweckmäßig sein, nur eine Teilmenge der vorhandenen Regler oder Teilregler zu deaktivieren und die übrigen Regler oder Teilregler zu aktivieren. Die Aktivierungsschwelle kann fest vorgegeben werden oder dynamisch angepasst werden. Des Weiteren ist es möglich, für verschiedene Regler oder Teilregler unterschiedlich hohe Aktivierungsschwellen vorzusehen. Diese können entsprechend teilweise oder sämtlich fest vorgegeben oder dynamisch angepasst werden.

Mithilfe des erfindungsgemäßen Verfahrens ist es möglich, auf der Basis des Kritikalitätsindikators die verschiedenen, diesen Kritikalitätsindikator verwendeten Regler zeitgleich zu aktivieren. Es ist auch möglich, dass verschiedene Regler oder Teilregler zu unterschiedlichen Zeitpunkten aktiviert werden. Anfangs- und/oder Endzeitpunkt der Aktivitätsphase eines Reglers oder Teilreglers können sowohl innerhalb als auch außerhalb der Aktivitätsphase eines anderen Reglers liegen.

Die Erfindung bezieht sich außerdem auf ein Steuergerät mit Mitteln zur Durchführung des vorbeschriebenen Verfahrens. Die Mittel umfassen mindestens eine Speichereinheit, mindestens eine Recheneinheit, einen Steuergeräteeingang und einen Steuergeräteausgang im Steuergerät. Des Weiteren ist es möglich, dass ein Steuergeräteverbund vorhanden ist, der mehrere einzelne Steuergeräte umfasst, wobei jedes der Steuergeräte in vorbeschriebener Weise ausgebildet ist. Die einzelnen Steuergeräte können jeweils einem Regler oder Teilregler zugeordnet sein.

Die Erfindung bezieht sich schließlich auf ein Regelsystem in einem Fahrzeug, das mindestens zwei einzelne, sich unterscheidende Regler oder Teilregler aufweist sowie ein vorbeschriebenes Steuergerät bzw. einen vorbeschriebenen Steuergeräteverbund.

Die Erfindung bezieht sich des Weiteren auf ein Fahrzeug mit einem vorbeschriebenen Regelsystem, beispielsweise auf ein Kraftfahrzeug oder auf ein motorisiertes Einspurfahrzeug.

Die Erfindung bezieht sich außerdem auf ein Computerprogrammprodukt mit einem Programmcode, der dazu ausgelegt ist, die vorbeschriebenen Verfahrensschritte auszuführen. Das Computerprogrammprodukt läuft in einem vorbeschriebenen Steuergerät bzw. Steuergeräteverbund ab.

Weitere Vorteile und zweckmäßige Ausführungen sind den weiteren Ansprüchen, der Figurenbeschreibung und den Zeichnungen zu entnehmen. Es zeigen:
- Fig. 1: ein Blockschaltbild mit einer Prinzipdarstellung der Ermittlung eines Kritikalitätsindikators aus verschiedenen Stabilitätsindikatoren, die aus diversen Zustands- und Umfeldgrößen eines Fahrzeugs ermittelt werden,
- Fig. 2: ein Blockschaltbild mit einer detaillierten Darstellung der Ermittlung des Kritikalitätsindikators,
- Fig. 3: ein Schaubild mit der Darstellung möglicher Reglereingriffe in Abhängigkeit des Kritikalitätsindikators,
- Fig. 4: Schaubilder mit der Darstellung der Aktivierung eines Reglers in Abhängigkeit des Kritikalitätsindikators,
- Fig. 5: Fig. 4 entsprechende Schaubilder, jedoch mit einem unterschiedlichen Reglerverlauf.

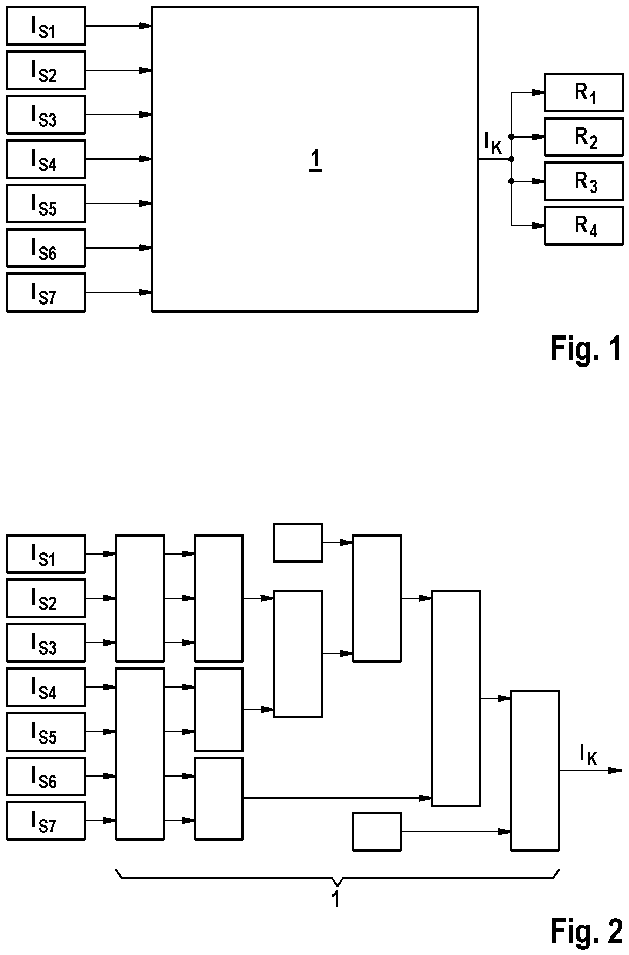

In Fig. 1 ist ein Blockschaltbild zur Ermittlung eines Kritikalitätsindikators I_{K} als Funktion verschiedener Stabilitätsindikatoren I_{S1}, I_{S2}, I_{S3}.... zur situationsabhängigen Parametrierung von verschiedenen Reglern R₁, R₂, R₃, R₄ in einem Fahrzeug dargestellt. Bei den Reglern R₁, R₂, R₃, R₄ handelt es sich entweder um voneinander unabhängige Regler und/oder um Teilregler eines gemeinsamen Reglers. Der Kritikalitätsindikator I_{K} stellt einen skalaren Wert dar, der die aktuelle Fahrzeugsituation widerspiegelt und den verschiedenen Reglern Rᵢ im Fahrzeug zur Verfügung gestellt wird. Bei den Reglern Rᵢ handelt es sich vorzugsweise um Stabilitätsregler, insbesondere zur Beeinflussung der Querdynamik des Fahrzeugs wie beispielsweise ein ESP-Regler, aber auch um einen oder mehrere Regler zur Beeinflussung der Längsdynamik des Fahrzeugs wie beispielsweise ein Antriebsschlupfregler.

Der Kritikalitätsindikator I_{K} wird fortlaufend als Funktion von Fahrzeugzustandsgrößen und/oder Umfeldgrößen des Fahrzeugs aktualisiert und den verschiedenen Reglern zur Verfügung gestellt. Diese Vorgehensweise ermöglicht es, über den Kritikalitätsindikator I_{K} nur eine Größe zu ermitteln, die zur Parametrierung der verschiedenen Regler im Fahrzeug genutzt wird. Je nach Höhe des Kritikalitätsindikators I_{K} können die Regler in unterschiedlicher Weise parametriert bzw. oberhalb oder unterhalb eines Aktivierungsschwellenwertes aktiviert bzw. deaktiviert werden.

Die fortlaufende Ermittlung des Kritikalitätsindikators I_{K} erfolgt in Abhängigkeit der Stabilitätsindikatoren I_{S1}, I_{S2}, I_{S3}.... Jeder Stabilitätsindikator I_{S} hängt von diversen Zustands- und/oder Umfeldgrößen des Fahrzeugs ab, wobei die verschiedenen Stabilitätsindikatoren I_{S} jeweils von zumindest teilweise unterschiedlichen Zustands- bzw. Umfeldgrößen abhängen. Die aktuellen Stabilitätsindikatoren I_{S} werden auf der Grundlage von Sensorinformationen ermittelt, welche über eine Sensorik im Fahrzeug festgestellt werden. Die verschiedenen Stabilitätsindikatoren I_{S} werden in einem Berechnungsblock 1 verarbeitet, in welchem der Kritikalitätsindikator I_{K} berechnet wird. Die Berechnung des Kritikalitätsindikators I_{K} kann unter Zuhilfenahme von Fuzzy Logic oder Künstlicher Intelligenz durchgeführt werden.

In Fig. 2 ist ein detailliertes Blockschaltbild zur Ermittlung des Kritikalitätsindikators I_{K} aus den Stabilitätsindikatoren I_{S} dargestellt. Der Berechnungsblock 1 unterteilt sich in verschiedene Teilschritte. Die Stabilitätsindikatoren I_{S} werden beispielsweise als Stabilitätsindikator I_{S1} in Abhängigkeit einer Energiebetrachtung mit dem Umsatz von Translationsenergie in Rotationsenergie im Verhältnis zum maximal möglichen Energiepotenzial berechnet. Ein weiterer Stabilitätsindikator I_{S2} wird als Funktion des aktuellen Schräglaufwinkels ermittelt, weitere Stabilitätsindikatoren können von der Querbeschleunigung des Fahrzeugs, vom Fahrerverhalten, vom Radschlupf, von der Längsgeschwindigkeit etc. abhängig sein. Sämtliche Stabilitätsindikatoren I_{S} werden fortlaufend auf der Grundlage aktueller Sensorinformationen ermittelt und dem Berechnungsblock 1 zur Verfügung gestellt, um einen aktuellen Kritikalitätsindikator I_{K} zu berechnen.

Die verschiedenen Stabilitätsindikatoren I_{S} können in dem Berechnungsblock 1 auf verschiedene Weise verarbeitet werden. Es ist beispielsweise möglich, dass ein Teil der Stabilitätsindikatoren im Berechnungsblock 1 zunächst auf den vollen Wertebereich zwischen 0 % und 100 % des Kritikalitätsindikators skaliert und anschließend weiterverarbeitet werden, wohingegen ein weiterer Teil der Stabilitätsindikatoren nur auf einen Teilwertebereich des Kritikalitätsindikators, beispielsweise zwischen 0 % und 50 %, skaliert wird und anschließend weiterverarbeitet wird. Des Weiteren ist es möglich, verschiedene weitere aktuelle Größen zu berücksichtigen, zum Beispiel zur Begrenzung des Kritikalitätsindikators einen weiteren Stabilitätsindikator heranzuziehen, beispielsweise einen Gierraten-Stabilitätsindikator. Auch die aktuelle Position im Lenksystem, im Gaspedal und im Bremspedal können jeweils als weitere Stabilitätsindikatoren berücksichtigt werden. Unter Anwendung von Fuzzy Logic und Künstlicher Intelligenz kann unter Berücksichtigung von limitierenden Stabilitätsindikatoren der gesuchte Kritikalitätsindikator I_{K} ermittelt werden, der als skalare Größe den verschiedenen Reglern R₁, R₂, R₃... zur Verfügung gestellt wird.

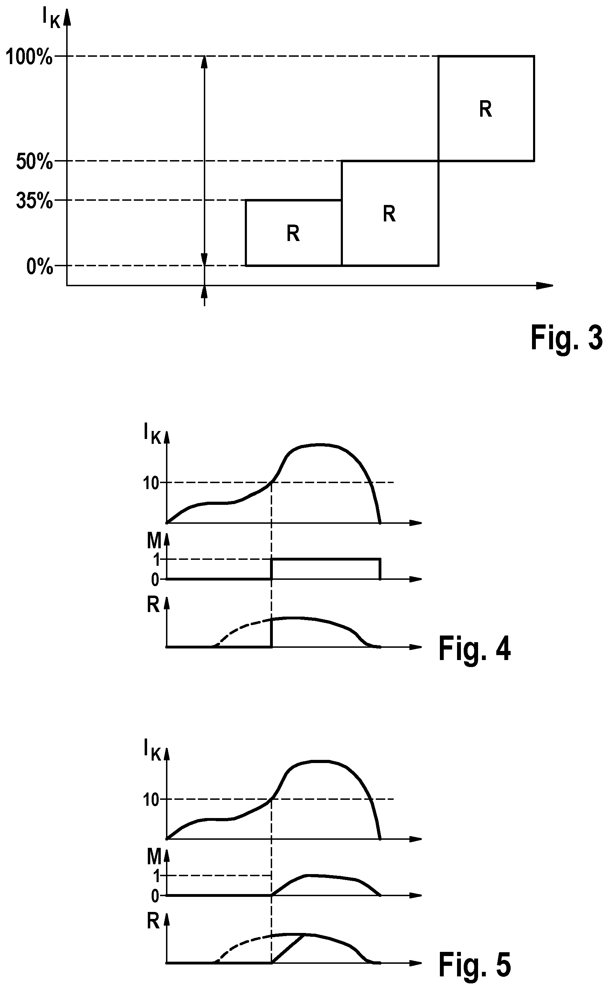

In Fig. 3 ist ein Schaubild gezeigt, in dem die Aktivierung verschiedener Regler R oder Teilregler im Fahrzeug als Funktion des Kritikalitätsindikators I_{K} dargestellt ist. Der Kritikalitätsindikator ist zwischen 0 % und 100 % skaliert. Unterhalb eines Aktivierungsschwellenwertes von beispielsweise 10 % bleiben die Regler R deaktiviert. Mit dem Überschreiten des Aktivierungsschwellenwertes bei einem Wertebereich des Kritikalitätsindikators I_{K} im Wertebereich zwischen 10 % und 100 % kommt eine Aktivierung der Regler R in Betracht, wobei mit zunehmendem Kritikalitätsindikator I_{K} ein stärkerer Reglereingriff erforderlich ist. Ein starker Reglereingriff, wie beispielhaft im rechten oberen Block R in Fig. 3 dargestellt, kann gegebenenfalls auch erst bei einer höheren Aktivierungsschwelle durchgeführt werden. Wenn beispielsweise die verschiedenen Reglerblöcke R einen Reglereingriff im Fall eines Unter- oder Übersteuerns repräsentieren, wird entsprechend bei einem verhältnismäßig kleinen Wert des Kritikalitätsindikators I_{K} nur ein schwacher Reglereingriff durchgeführt, wohingegen bei höherem Wert des Kritikalitätsindikators I_{K} ein starker Reglereingriff erfolgt.

In Fig. 4 sind drei übereinanderliegende Schaubilder gezeigt, wobei das obere Schaubild einen beispielhaften Verlauf des Kritikalitätsindikators I_{K} zeigt, das darunterliegende Schaubild den Wert eines Multiplikators M und das untere Schaubild den Verlauf des Reglereingriffs ohne und mit Multiplikator. Der Kritikalitätsindikator I_{K} liegt zunächst unter dem Aktivierungsschwellenwert, der beispielhaft bei 10 % liegt, wobei unterhalb dieses Schwellenwertes der Multiplikator M den Wert 0 einnimmt. Sobald der Kritikalitätsindikator I_{K} den Schwellenwert überschreitet, wird der Multiplikator M auf den Wert 1 gesetzt. Der Reglereingriff des Reglers R beginnt, sobald der Multiplikator M den Wert 1 einnimmt, was im unteren Schaubild mit durchgezogener Linie des Reglereingriffs dargestellt ist. In dem Wertebereich mit dem Multiplikator M gleich 0 ist der potenzielle Reglereingriff dagegen mit gestrichelter Linie dargestellt.

In Fig. 5 sind die gleichen Schaubilder wie in Fig. 4 dargestellt mit dem Verlauf des Kritikalitätsindikators I_{K} im oberen Schaubild, dem Verlauf des Multiplikators M im mittleren Schaubild und dem Verlauf des Reglereingriffs des Reglers R im unteren Schaubild. Um jedoch ein Einphasen bzw. Ausphasen des Reglereingriffs umzusetzen, wird der Multiplikator M, sobald der Kritikalitätsindikator I_{K} den Aktivierungsschwellenwert überschreitet, nicht auf den Wert 1 gesetzt, sondern folgt annähernd dem Kurvenverlauf des Kritikalitätsindikators I_{K} und steigt maximal auf den Wert 1 an. Dementsprechend weist der Reglereingriff des Reglers R einen geringfügig verzögerten Verlauf auf.

## Patentansprüche

1. Verfahren zur Durchführung von Regelvorgängen in einem Fahrzeug, bei dem mindestens zwei verschiedene Stabilitätsindikatoren (I_{Si}) aus aktuellen Zustands- und/oder Umfeldgrößen des Fahrzeugs ermittelt werden, wobei für die verschiedenen Stabilitätsindikatoren (I_{Si}) unterschiedliche Größen herangezogen werden und aus den verschiedenen Stabilitätsindikatoren (I_{Si}) gemäß einer vorgegebenen Berechnungsvorschrift ein Kritikalitätsindikator (I_{K}) berechnet wird, wobei der Kritikalitätsindikator (I_{K}) in mindestens zwei verschiedenen Reglern (Rᵢ) oder mindestens zwei verschiedenen Teilreglern eines Reglers (Rᵢ) des Fahrzeugs zur Festlegung von Reglerparametern verwendet wird, wobei ein oder mehrere Regler (Rᵢ) oder Teilregler nur aktiviert werden, wenn der Kritikalitätsindikator (I_{K}) eine Aktivierungsschwelle überschreitet, **dadurch gekennzeichnet, dass** verschiedenen Reglern (Rᵢ) oder Teilreglern unterschiedliche Aktivierungsschwellen zugeordnet sind, wobei die zugelassene Eingriffsstärke eines Reglers oder Teilreglers kontinuierlich angepasst wird.

2. Verfahren nach Anspruch 1, **dadurch gekennzeichnet, dass** die Stabilitätsindikatoren (I_{Si}) querdynamische Zustandsgrößen und längsdynamische Zustandsgrößen des Fahrzeugs umfassen.

3. Verfahren nach Anspruch 1 oder 2, **dadurch gekennzeichnet, dass** die Stabilitätsindikatoren (I_{Si}) als Umfeldgrößen Fahrereingaben umfassen.

4. Verfahren nach einem der Ansprüche 1 bis 3, **dadurch gekennzeichnet, dass** in der Berechnungsvorschrift zur Bestimmung des Kritikalitätsindikators (I_{K}) eine Gewichtung der verschiedenen Stabilitätsindikatoren (I_{Si}) durchgeführt wird.

5. Verfahren nach einem der Ansprüche 1 bis 4, **dadurch gekennzeichnet, dass** in der Berechnungsvorschrift Fuzzy Logic oder Künstliche Intelligenz eingesetzt wird.

6. Verfahren nach einem der Ansprüche 1 bis 5, **dadurch gekennzeichnet, dass** zumindest ein Stabilitätsindikator (I_{Si}) zur Begrenzung des Kritikalitätsindikators (I_{K}) herangezogen wird.

7. Verfahren nach einem der Ansprüche 1 bis 6, **dadurch gekennzeichnet, dass** in der Berechnungsvorschrift zur Bestimmung des Kritikalitätsindikators (I_{K}) verschiedene Stabilitätsindikatoren (I_{Si}) unterschiedlichen Wertebereichen des Kritikalitätsindikators (I_{K}) zugeordnet sind.

8. Verfahren nach einem der Ansprüche 1 bis 8, **dadurch gekennzeichnet, dass** die verschiedenen, den Kritikalitätsindikator (I_{K}) verwendenden Regler (Rᵢ) oder Teilregler zeitgleich aktivierbar sind.

9. Steuergerät oder Steuergeräteverbund mit mehreren Steuergeräten, enthaltend Mittel, die zur Durchführung des Verfahrens nach einem oder mehreren der vorhergehenden Ansprüche ausgestaltet sind.

10. Regelsystem in einem Fahrzeug, mit mindestens zwei verschiedenen Reglern oder Teilreglern und mit einem Steuergerät oder einem Steuergeräteverbund nach Anspruch 9.

11. Fahrzeug mit einem Regelsystem nach Anspruch 10.

12. Computerprogrammprodukt mit einem Programmcode, der dazu ausgelegt ist, Schritte des Verfahrens nach einem der Ansprüche 1 bis 8 auszuführen, wenn das Computerprogrammprodukt in einem Steuergerät oder einem Steuergeräteverbund gemäß Anspruch 9 abläuft.

## Claims

1. Method for carrying out regulating operations in a vehicle, in which at least two different stability indicators (I_{Si}) are determined from current state and/or environmental variables of the vehicle, wherein different variables are used for the different stability indicators (I_{Si}) and a criticality indicator (l_{K}) is calculated from the different stability indicators (I_{Si}) in accordance with a predefined calculation rule, wherein the criticality indicator (I_{K}) is used in at least two different regulators (Rᵢ) or at least two different sub-regulators of a regulator (Rᵢ) of the vehicle to define regulator parameters, wherein one or more regulators (Rᵢ) or sub-regulators are activated only if the criticality indicator (I_{K}) exceeds an activation threshold, **characterized in that** different activation thresholds are assigned to different regulators (Rᵢ) or sub-regulators, wherein the permitted level of intervention of a regulator or sub-regulator is continuously adjusted.

2. Method according to Claim 1, **characterized in that** the stability indicators (I_{Si}) comprise lateral-dynamic state variables and longitudinal-dynamic state variables of the vehicle.

3. Method according to Claim 1 or 2, **characterized in that** the stability indicators (I_{Si}) comprise driver inputs as environmental variables.

4. Method according to one of Claims 1 to 3, **characterized in that** the different stability indicators (Isi)_{Si}) are weighted in the calculation rule for determining the criticality indicator (I_{K}).

5. Method according to one of Claims 1 to 4, **characterized in that** fuzzy logic or artificial intelligence is used in the calculation rule.

6. Method according to one of Claims 1 to 5, **characterized in that** at least one stability indicator (I_{Si}) is used to limit the criticality indicator (I_{K}).

7. Method according to one of Claims 1 to 6, **characterized in that** different stability indicators (I_{Si}) are assigned to different value ranges of the criticality indicator (I_{K}) in the calculation rule for determining the criticality indicator(I_{K}).

8. Method according to one of Claims 1 to 8, **characterized in that** the various regulators (Rᵢ) or sub-regulators using the criticality indicator (I_{K}) can be activated simultaneously.

9. Control device or combination of control devices, containing means which are configured to carry out the method according to one or more of the preceding claims.

10. Regulating system in a vehicle, having at least two different regulators or sub-regulators and having a control device or a combination of control devices according to Claim 9.

11. Vehicle having a regulating system according to Claim 10.

12. Computer program product having program code designed to carry out steps of the method according to one of Claims 1 to 8 when the computer program product runs in a control device or a combination of control devices according to Claim 9.

## Revendications

1. Procédé pour la mise en œuvre de processus de commande dans un véhicule, dans lequel au moins deux indicateurs de stabilité différents (I_{Si}) sont déterminés à partir de variables d'état et/ou d'environnement actuelles du véhicule, différentes variables étant utilisées pour les différents indicateurs de stabilité (I_{Si}) et, à partir des différents indicateurs de stabilité (I_{Si}), un indicateur de criticité (I_{K}) est calculé selon une instruction de calcul prédéfinie, l'indicateur de criticité (I_{K}) étant utilisé dans au moins deux contrôleurs (Rᵢ) différents ou au moins deux contrôleurs partiels différents d'un contrôleur (Rᵢ) du véhicule pour établir des paramètres de commande, un ou plusieurs contrôleurs (Rᵢ) ou contrôleurs partiels n'étant activés que lorsque l'indicateur de criticité (I_{K}) dépasse un seuil d'activation, **caractérisé en ce que** différents seuils d'activation sont associés à différents contrôleurs (Rᵢ) ou contrôleurs partiels, l'intensité d'intervention autorisée d'un contrôleur ou d'un contrôleur partiel étant ajustée en continu.

2. Procédé selon la revendication 1, **caractérisé en ce que** les indicateurs de stabilité (I_{Si}) comprennent des variables d'état dynamiques transversales et des variables d'état dynamiques longitudinales du véhicule.

3. Procédé selon la revendication 1 ou 2, **caractérisé en ce que** les indicateurs de stabilité (I_{Si}) comprennent des entrées de conducteur en tant que variables d'environnement.

4. Procédé selon l'une des revendications 1 à 3, **caractérisé en ce que**, dans l'instruction de calcul, pour déterminer l'indicateur de criticité (I_{K}), une pondération des différents indicateurs de stabilité (I_{Si}) est effectuée.

5. Procédé selon l'une des revendications 1 à 4, **caractérisé en ce que**, dans l'instruction de calcul, il est recouru à une logique floue ou à une intelligence artificielle.

6. Procédé selon l'une des revendications 1 à 5, **caractérisé en ce que**, pour limiter l'indicateur de criticité (I_{K}), il est fait appel à au moins un indicateur de stabilité (I_{Si}).

7. Procédé selon l'une des revendications 1 à 6, **caractérisé en ce que**, dans l'instruction de calcul, pour déterminer l'indicateur de criticité (I_{K}), différents indicateurs de stabilité (I_{Si}) sont associés à différentes plages de valeurs de l'indicateur de criticité (I_{K}).

8. Procédé selon l'une des revendications 1 à 8, **caractérisé en ce que** les différents contrôleurs (Rᵢ) ou contrôleurs partiels utilisant l'indicateur de criticité (I_{K}) peuvent être activés simultanément.

9. Appareil de commande ou combinaison d'appareils de commande, comportant des moyens qui sont configurés pour mettre en œuvre le procédé selon une ou plusieurs des revendications précédentes.

10. Système de commande dans un véhicule, comprenant au moins deux contrôleurs ou contrôleurs partiels différents et comprenant un appareil de commande ou une combinaison d'appareils de commande selon la revendication 9.

11. Véhicule comportant un système de commande selon la revendication 10.

12. Produit programme informatique comprenant un code de programme qui est conçu pour exécuter des étapes du procédé selon l'une des revendications 1 à 8 lorsque le produit programme informatique est exécuté sur un appareil de commande ou une combinaison d'appareils de commande selon la revendication 9.
